# EUROPÄISCHE PATENTANMELDUNG

(11) **EP 2 623 731 A1**
(43) Veröffentlichungstag der Anmeldung: **07.08.2013**
(21) Anmeldenummer: 13000474.0
(22) Anmeldetag: 31.01.2013
(51) Int. Cl.: F01D 25/00, B08B 3/02, G02B 23/24

(54) **Vorrichtung und Verfahren zur Bearbeitung von Hochdruckturbinenschaufeln einer Gasturbine**

(30) Priorität: 06.02.2012 DE 102012002275
(71) Anmelder: Rolls-Royce Deutschland Ltd & Co KG, 15827 Blankenfelde-Mahlow (DE)
(72) Erfinder: Dudeck, Matthias, 12157 Rangsdorf (DE); Duprè, Jürgen, 15711 Zeesen (DE); Uhlmann, Eckart, 25368 Kiebitzreihe (DE); Bilz, Martin, 10713 Berlin (DE)
(74) Vertreter: Hoefer & Partner

(57) **Zusammenfassung**

Die Erfindung bezieht sich auf eine Vorrichtung und ein Verfahren zur In-Situ-Bearbeitung von Turbinenschaufeln (1 a, 1b) einer Gasturbine, mit einer Bearbeitungsvorrichtung (10), welche durch zumindest eine Zugangsöffnung (5) in eine Brennkammer (21) der Gasturbine einführbar und an Kühlluftausnehmungen (3) der Turbinenschaufeln platzierbar ist, wobei die Bearbeitungsvorrichtung (10) endseitig einen Vorrichtungskopf (12) mit zumindest einem Werkzeug und zumindest einer Strahldüse (14) umfasst, wobei die Strahldüse (14) mit einem Medienschlauch (18) zur externen Zufuhr eines Bearbeitungsmediums verbunden ist, wobei die Bearbeitungsvorrichtung (10) mit einer Betätigungsvorrichtung (16, 22, 24) zur exakten Führung und/oder Platzierung und/oder Bewegung des Vorrichtungskopfes (12) versehen ist.

## Beschreibung

Die Erfindung bezieht sich auf eine Vorrichtung und ein Verfahren zur Bearbeitung von Hochdruckturbinenschaufeln einer Gasturbine, um Ablagerungen und/oder Fremdstoffschichten im Bereich von Kühlluftausnehmungen oder Kühlluftbohrungen an den Hochdruckturbinenschaufeln zu entfernen.

Leit- und Laufschaufeln im Hochdruckturbinenbereich besitzen zum Schutz der Bauteiloberflächen, welche mit dem heißen Gasstrom in Kontakt sind, eine Filmkühlung der Oberfläche. Diese wird durch eine unterschiedliche Anzahl von Kühlluftbohrungen der Schaufel erzeugt.

Während des Betriebes eines Triebwerks werden die Kühlluftbohrungen durch unterschiedliche Einflüsse teilweise bzw. vollständig verschlossen.

Dies führt zu einer Einschränkung, bzw. zu einem partiellen Verlust der Filmkühlung der Leit- und Laufschaufeloberfläche was zur Zerstörung des Bauteils führen kann. Aus diesen Gründen müssen die Kühlluftbohrungen an den Leit- und Laufschaufeln im Rahmen einer Reparaturmaßnahme wieder in einen ordnungsgemäßen Zustand gebracht werden.

Hierfür muss gemäß dem Stand der Technik das Triebwerk aus dem Luftfahrzeug ausgebaut und in dafür vorgesehene und autorisierte Werkstätten überführt werden. Diese Werkstätten benötigen eine Ausstattung, die mit der von Neuteilfertigungseinrichtungen nahezu vergleichbar ist. Darüber hinaus muss das Luftfahrzeug während der Zeitdauer der Triebwerksinstandsetzung mit einem Ersatztriebwerk ausgerüstet werden. Die Kosten für diese Maßnahmen sind erheblich.

Der Erfindung liegt die Aufgabe zugrunde, eine Vorrichtung und ein Verfahren der eingangs genannten Art zu schaffen, welche bei einfacher Durchführung und einfacher Ausgestaltung eine zuverlässige Freilegung und/oder Bearbeitung der Kühlluftbohrungen an Hochdruckturbinenschaufeln eines Gasturbinentriebwerks ermöglichen.

Erfindungsgemäß wird die Aufgabe durch die Merkmalskombinationen der unabhängigen Ansprüche gelöst, die Unteransprüche zeigen weitere vorteilhafte Ausgestaltungen der Erfindung.

Erfindungsgemäß wird das Verfahren zur Freilegung der Kühlluftbohrungen an Hochdruckturbinenschaufeln bei einem nicht-demontierten Flugzeugtriebwerk durchgeführt. Es ist somit erfindungsgemäß nicht erforderlich, an einem Flugzeug ein Triebwerk zu tauschen und das Triebwerk in eine Werkstätte zu überführen. Vielmehr wird das erfindungsgemäße Verfahren am eingebauten Triebwerk durchgeführt.

Erfindungsgemäß werden im nicht-demontierten Zustand mittels der erfindungsgemäßen Vorrichtung, nämlich mittels eines manuellen, teilautomatisierten oder automatisierten steuerbaren Werkzeugs die Ablagerungen und/oder Fremdstoffschichten nur an den Stellen entfernt, an denen diese gelöst werden sollen. Die Ablagerungen und/oder Fremdstoffschichten werden strahlend mittels eines Druckflüssigkeitsstrahls abgetragen. Die eingesetzte Flüssigkeit kann dabei Wasser und/oder Wasser mit Zusätzen, Öl, Kohlendioxid oder Stickstoff sein. Darüber hinaus ist auch die Nutzung von hochenergetischem Licht (Laser) für die Entfernung der Fremdstoffschichten geeignet.

Nach dem Abtragen oder Entfernen der Ablagerungen und/oder Fremdstoffschichten ist es in Weiterbildung der Erfindung günstig, eine zusätzliche Spülung oder Reinigung der Hochdruckturbinenschaufeln vorzunehmen, insbesondere auch des Innenraums der Hochdruckturbinenschaufeln, um gegebenenfalls durch die Kühlluftausnehmung eingetretene Partikel auszuspülen oder auszubringen, beispielsweise mittels eines Gasstromes, beispielsweise Luft.

Erfindungsgemäß wird das Verfahren bevorzugterweise unter visueller Kontrolle durchgeführt, beispielsweise mit Hilfe eines Endoskops.

Weiterhin ist es erfindungsgemäß besonders günstig, wenn die zur Durchführung des Verfahrens benötigten Werkzeuge und/oder Geräte durch in der Gasturbine vorgesehenen Boroskop-Öffnungen oder Brenner-Öffnungen der Brennkammer in den Bereich der Hochdruckturbine eingebracht werden.

Die Führung des Werkzeuges und/oder der Geräte zum zu bearbeitenden Bereich wird erfindungsgemäß über eine Vorrichtung realisiert, welche die Fähigkeit besitzt, ihre Form individuell, durch den Einsatz von Formgedächtnislegierungen zu verändern. Für die Bearbeitung werden die Kraftstoffeinspritzdüsen der Brennkammer für die jeweiligen Abschnitte ausgebaut. In die sich ergebende Öffnung wird eine Einführhülse eingebracht, durch welche das Werkzeug bzw. die Vorrichtung radial eingeführt wird. Diese weist einen 90° Winkel auf und wird in die Öffnung der ausgebauten Kraftstoffeinspritzdüsen verschraubt. Das Werkzeug bzw. die Vorrichtung wird radial und axial durch die Einführhilfe geschoben und somit direkt an den entsprechenden Abschnitt geleitet. Die Steuerung der Vorrichtung wird durch Formgedächtnisdrähte realisiert, welche als "künstlicher Muskel" fungieren in dem sie nach Erwärmung kontrahieren und die Vorrichtung dadurch biegen. Nach Abkühlung entspannen sich diese wieder und nehmen die ursprüngliche Form an. Bei der Vorrichtung sind zwei Drähte um 90° versetzt auf einem Schlauch, am Anfang und am Ende kraftschlüssig verspannt. Der Schlauch besitzt eine ausreichende Steifigkeit damit er eine erforderliche Rückstellkraft aufbringt, um die Drähte nach Abkühlung wieder in ihre ursprüngliche Form zu bringen. Die Drähte werden mit einem Schrumpfschlauch direkt an den Trägerschlauch gepresst und damit geführt, um die größtmögliche Verformung zu erreichen. Durch die um 90° versetzten Drähte bewegt sich das Werkzeug auf einer Kreisbahn. Mit einer gesteuerten Widerstandserwärmung kann der Draht entsprechend positioniert werden. Die Brennkammer wird in Abschnitte eingeteilt, womit die Erreichbarkeit aller Abschnitte der Leitschaufeln mit dem Werkzeug gewährleistet ist. Durch die tangentiale Bewegung des Werkzeugs auf einer Kreisbahn werden die Kühlluftbohrungen an der Eintrittskante der Leitschaufeln in diesem Abschnitt erreicht und bearbeitet. Durch den Wechsel des Werkzeugkopfes kann wahlweise auch zwischen die einzelnen Leitschaufeln gesteuert werden und die Kühlluftbohrungen auf Saug- und Druckseite bearbeitet werden. Auf diese Weise sind dann auch die axial hinter den Leitschaufeln befindlichen Laufschaufeln erreichbar und deren Kühlluftbohrungen können ebenfalls mit diesem Verfahren bearbeitet werden.

Die Führung des Werkzeuges und/oder der Geräte zum zu bearbeitenden Bereich kann erfindungsgemäß auch über einzubringende Schienensysteme erfolgen, welche starrer, flexibler oder auch volumenvergrößernder Art sein können. Die Schienensysteme sind so ausgebildet, dass einzelne vorgefertigte Rohrabschnitte nacheinander durch die Boroskop-Öffnung- oder Öffnung der ausgebauten Kraftstoffeinspritzdüsen eingeführt werden. Die Rohrabschnitte sollten dabei idealerweise mit einander starr verbunden werden. Die Vorrichtung basiert darauf, dass damit in Abhängigkeit der vorherigen visuellen Inspektion der entsprechende zu reinigende Bereich angesteuert wird. In gleicherweise können vorgefertigte elastische Vorrichtungen in die Brennkammer eingebracht und mittels Druckluft aufgeblasen werden. Durch die Vorrichtungen kann dann das eigentliche Werkzeug zum Bestimmungsort geführt werden.

Weiterhin ist es möglich Seilzugsysteme zur Führung und Navigation der Werkzeuge und/oder Geräte zu verwenden, welche durch verschiedene Öffnungen in das Triebwerk eingebracht werden. Dabei soll erfindungsgemäß eine Vorrichtung über der Boroskop-Öffnung oder einer Öffnung einer ausgebauten Kraftstoffeinspritzdüse und/oder dem Triebwerksaustritt und eine weitere ebenfalls am Triebwerksaustritt befestigt werden, um das Seilsystem zu führen. Am Seilsystem ist das Werkzeug und idealerweise eine Optik befestigt, welche durch Bewegung des Seils an die entsprechende Schaufel geführt wird.

Auch nach Ausbau von Triebwerksanbauteilen, z. B. Kraftstoffeinspritzdüsen, Zündkerzen etc., ergeben sich oben genannten Öffnungen, die erfindungsgemäß verwendet werden können. Durch diese Öffnungen ist der Hochdruckturbinenbereich leicht zugänglich, ohne dass zusätzliche oder umfangreiche Demontagearbeiten erforderlich wären. Das erfindungsgemäße Verfahren zeichnet sich somit durch eine schnelle und kostengünstige Durchführbarkeit aus. Durch die Wiederherstellung der Funktion der Kühlluftbohrungen am im Luftfahrzeug eingebauten Triebwerk werden ein Abbau des Triebwerks und eine Instandsetzung in dafür autorisierten Betrieben sowie ein Einbau eines Leasing- oder Austauschtriebwerks in das Luftfahrzeug vermieden. Somit führt das erfindungsgemäße Verfahren zum einen zu einer erheblichen Kostensenkung, zum anderen zu einer erheblichen Verringerung der Stillstandszeit des Luftfahrzeugs.

Im Folgenden wird die Erfindung anhand von Ausführungsbeispielen in Verbindung mit der Zeichnung beschrieben. Dabei zeigt:
- Fig. 1: eine schematische Schnittansicht einer erfindungsgemäßen Hochdruckturbine mit Laufschaufel und Leitschaufeln,
- Fig. 2: eine perspektivische Ansicht einer erfindungsgemäßen Leitschaufel mit Ablagerungen und/oder Fremdstoffschichten,
- Fig. 3: eine schematische Darstellung eines Gasturbinentriebwerks mit Zugänglichkeiten für Boroskop-Arbeiten,
- Fig. 4: eine vereinfachte, schematische Darstellung eines Boroskopie-Geräts,
- Fig. 5: eine perspektivische Darstellung eines Ausführungsbeispiels der erfindungsgemäßen Vorrichtung mit Einführhilfe,
- Fig. 6: eine Detailansicht der Vorrichtung gemäß Fig. 5,
- Fig. 7: eine vereinfachte Darstellung einer Brennkammer mit eingesetzter Vorrichtung,
- Fig. 8, 9: Skizzen der erfindungsgemäßen Vorrichtung im inaktiven (Fig. 8) und aktiven (Fig. 9) Zustand in der Brennkammer,
- Fig. 10: eine vereinfachte Skizze zur Darstellung des Einsatzes von aufblasbaren Schienen zur Werkzeugführung, und
- Fig. 11: eine vereinfachte Skizze zur Darstellung des Einsatzes von Seilzugsystemen zur Werkzeugführung.

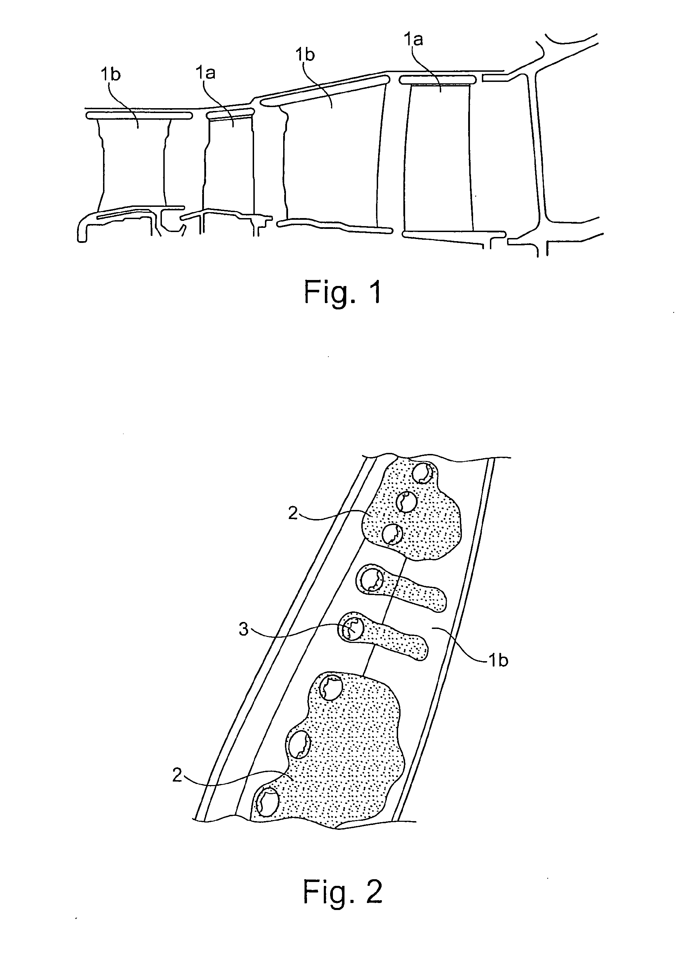

Die Fig. 1 zeigt eine vereinfachte Schnittansicht mit Laufschaufeln 1a einer Hochdruckturbine eines Gasturbinentriebwerks sowie mit Leitschaufeln 1b der Hochdruckturbine. Der Aufbau entspricht dem Stand der Technik, so dass auf weitere Erläuterungen verzichtet werden kann.

Die Fig. 2 zeigt in perspektivischer, vereinfachter Darstellung einen Teilbereich einer Eintrittskante einer Hochdruckturbinenschaufel 1b, welche mit Kühlluftausnehmungen 3 (Kühlluftbohrungen) versehen ist. Die Fig. 2 zeigt im oberen Bereich Ablagerungen 2, hervorgerufen durch Fremdkörper im Gasstrom sowie im unteren Bereich Ablagerungen 2, hervorgerufen durch die interne Kühlluft, welche aus den Kühlluftausnehmungen 3 während des Betriebs der Gasturbine ausströmt sowie Ablagerungen direkt in der Bohrung, welche den Bohrungsdurchmesser langsam zusetzen.

Um die Demontage von Triebwerken zu ersparen, werden Sichtkontrollen mit einem Boroskop oder Flexoskop durchgeführt. Dieses dünne Rohr, das seinen Ursprung in der medizinischen Endoskopie hat, ist im Inneren mit einer Linsenoptik ausgestattet, die in einen zu untersuchenden Hohlraum eingeführt werden kann. Lichtleiterfasern umschließen die Optik und bringen das Licht aus einer angeschlossenen Quelle zum Ort der Inspektion, von wo ein reflektiertes Bild durch die Optik zurück zum Auge des Betrachters oder in eine Kamera mit angeschlossenem Bildschirm gelangt. So liefert die Boroskopie Bilder von Orten, die ohne die Demontage größerer Bauteile niemals zugänglich wären.

Ein Flugtriebwerk besitzt für die Boroskopie-Untersuchung eine Vielzahl spezieller Öffnungen, die es ermöglichen, die Optik direkt an die zu untersuchende Stelle zu führen, beispielsweise in jede einzelne Verdichterstufe. Für letztere reicht eine einzige Öffnung, weil die zu untersuchenden Schaufeln per Hand vor die Optik des Boroskops gedreht werden können. Starre Bauteile ohne direkten Zugang werden mit einem Flexoskop inspiziert. Anstelle des starren Rohrs besitzt dieses Werkzeug einen biegsamen Schlauch, in dem Glasfasern die Linsenoptik ersetzen. Mit einer Arbeitslänge von mehreren Metern können damit auch Bauteile inspiziert werden, die nicht auf geradem Weg zu erreichen sind.

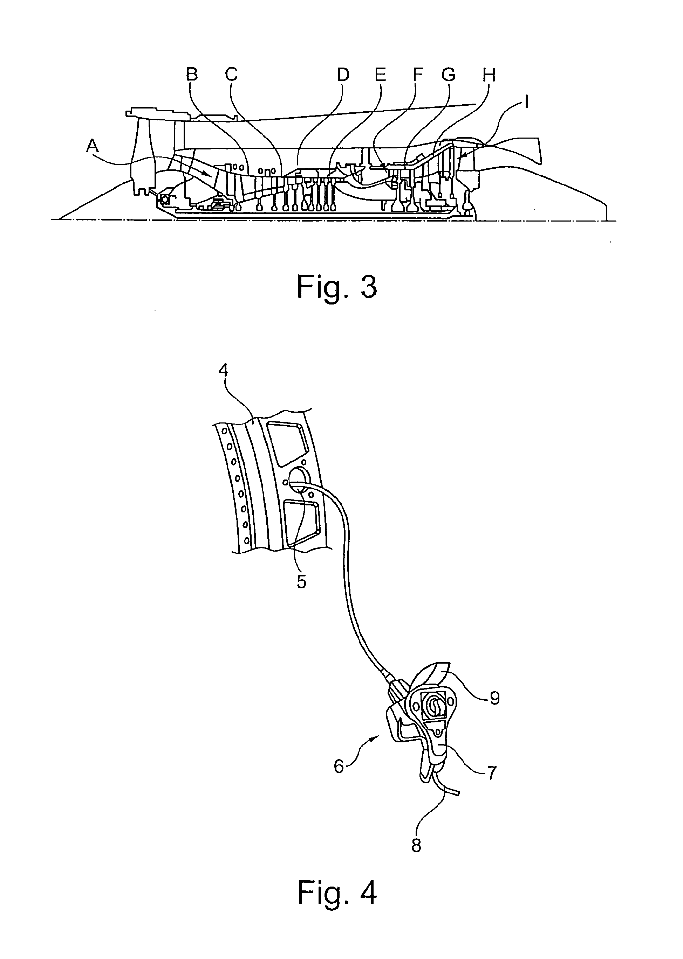

Die Fig. 3 zeigt eine schematische Teil-Axial-Schnittansicht eines Gasturbinentriebwerks mit prinzipiellen Zugänglichkeiten für Boroskop-Arbeiten. Dabei ist ersichtlich, dass durch Demontage von Anbauteilen, durch Öffnung von Zugangsöffnungen und Ähnlichem ein Zugang zu unterschiedlichsten Bereichen des Gasturbinentriebwerks möglich ist.

In Fig. 3 sind insbesondere folgende Komponenten/Bauteile gezeigt:
- A: Hochdruckverdichterlaufschaufeln Stufe 1, Eintrittskante
- B: Hochdruckverdichterlaufschaufeln Stufe 1, Austrittskante Hochdruckverdichterlaufschaufeln Stufe 2, Eintrittskante
- C: Hochdruckverdichterlaufschaufeln Stufe 3, Austrittskante Hochdruckverdichterlaufschaufeln Stufe 4, Eintrittskante
- D: Hochdruckverdichterlaufschaufeln Stufe 5, Austrittskante Hochdruckverdichterlaufschaufeln Stufe 6, Eintrittskante
- E: Hochdruckverdichterlaufschaufeln Stufe 9, Austrittskante Hochdruckverdichterlaufschaufeln Stufe 10, Eintrittskante
- F: Hochdruckturbinenlaufschaufeln Stufe 1, Eintrittskante Hochdruckturbinenleitschaufeln Stufe 1, Brennkammer
- G: Hochdruckturbinenlaufschaufeln Stufe 1, Austrittskante Hochdruckturbinenlaufschaufeln Stufe 2, Eintrittskante
- H: Hochdruckturbinenlaufschaufeln Stufe 2, Austrittskante Niederdruckturbinenlaufschaufeln Stufe 1, Eintrittskante
- I: Niederdruckturbinenlaufschaufeln Stufe 2, Austrittskante

Die Fig. 4 zeigt in schematischer Weise den Einsatz von Boroskop-Geräten im Zusammenhang mit dem erfindungsgemäßen Verfahren. Dabei ist ein Teil eines Gehäuses 4 dargestellt, welches mit einer Boroskop-Öffnung 5 (Zugangsöffnung) versehen ist. Diese kann durch Entfernen eines Deckels oder durch Abbau eines Aggregats oder Ähnlichem geschaffen werden. Durch die Öffnung 5 wird ein Manipulator 6 eingeführt. Der Manipulator 6 ist mit einer Steuereinheit 7 verbunden, welche beispielsweise mit einem Schlauch 8 verbunden sein kann, durch welchen Medien zugeführt oder abgesaugt werden können. Bei dem in Fig. 4 gezeigten schematischen Ausführungsbeispiel weist die Steuereinheit 7 einen Bildschirm 9 auf.

Der Manipulator 6 kann mit einem Werkzeug gekoppelt sein, um Partikel abzutragen und abzusaugen bzw. zu analysieren. Eine Anzeige- und Betätigungseinheit bzw. die Steuereinheit 7 ermöglichen mittels des Bildschirms 9 eine Überprüfung und Steuerung/Kontrolle der Arbeiten.

Es versteht sich, dass die Darstellung der Fig. 4 nur sehr schematisch die einzelnen Komponenten und deren Funktionsweise darstellt.

Mit der Erfindung wird ermöglicht, die Reinigung der Kühlluftbohrungen auszuführen ohne das Triebwerk vom Luftfahrzeug abzubauen. Hierfür werden über die an dem Triebwerk befindlichen Boroskop-Öffnungen miniaturisierte Werkzeuge dem Reparatur-/Reinigungsbereich zugeführt. Es besteht die Möglichkeit, dass mit Hilfe des Boroskops durch ein Werkzeug Partikel der Verschmutzung gelöst werden und in Verbindung mit einer lokalen Absaugvorrichtung aufgefangen werden. Eine Analyse der Schmutzpartikel ermöglicht die differenzierte Auswahl eines entsprechenden Reinigungsmediums. Mit Hilfe des Boroskops wird das geeignete Reinigungsmedium (pastöse Form oder Schneestrahlen oder Trockeneisstrahlen) auf den betroffenen Bereich der Hochdruckturbinenleit-, bzw. -laufschaufel aufgebracht. Durch die gezielte Auswahl des Reinigungsmediums wird ein Anlösen der Verschmutzung, bzw. eine Auflösung des Haftmechanismus zwischen Bauteil und Schmutzpartikel herbeigeführt. Durch eine mechanische Nacharbeit, z.B. durch ein mit Hilfe des Boroskops zugeführtes Mikrostrahlmedium in Verbindung mit einer effektiven Absaugvorrichtung, wird die Bauteiloberfläche bzw. die Kühlluftbohrung gereinigt. Alternativ zur mechanischen Nacharbeit besteht auch die Möglichkeit, eine dem ausgewählten Reinigungsmedium angepasste Reinigungsflüssigkeit zu verwenden. Diese kann mit Hilfe des Boroskops zielgerichtet auf den zu reinigenden Bereich gerichtet werden. Durch eine Absaugvorrichtung wird ein Großteil der aufgelösten Schmutzpartikel zusammen mit der Reinigungsflüssigkeit abgesaugt. Eine abschließende visuelle Kontrolle stellt sicher, dass der zu reinigende Bereich wieder weitestgehend den Zeichnungsanforderungen angepasst und somit in einen ordnungsgemäßen Zustand versetzt wurde.

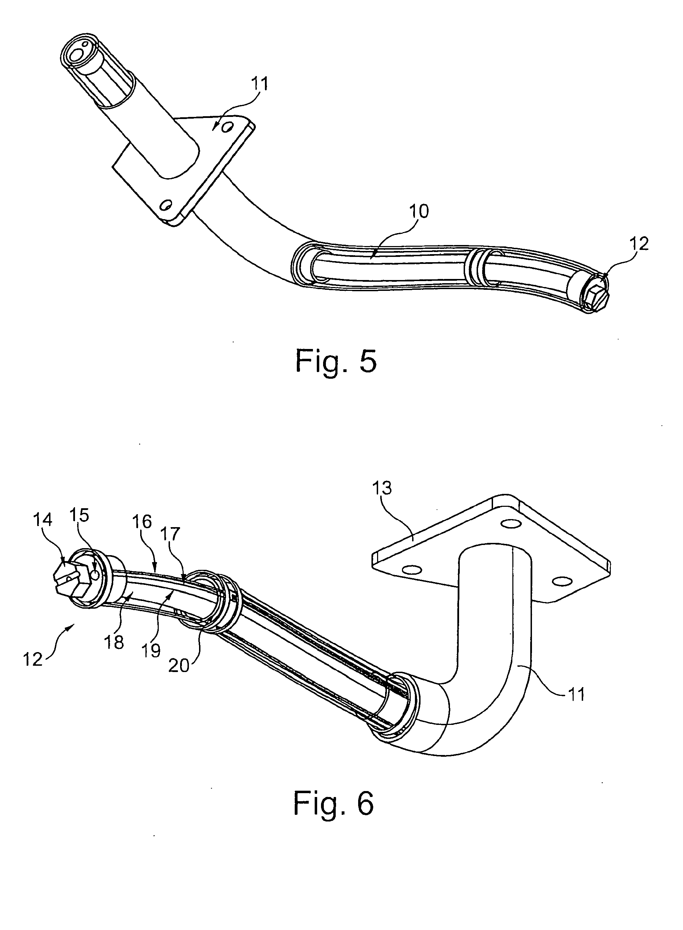

Die Fig. 5 zeigt ein Ausführungsbeispiel einer erfindungsgemäßen Vorrichtung 10 mit einer Einführhilfe 11 und einem Werkzeugkopf 12. Die Einführhilfe 11 weist einen Flansch 13 auf, welcher mit dem Gehäuse 4 verschraubbar ist.

In der Fig. 6 ist die erfindungsgemäße Vorrichtung im Detail dargestellt. Dabei ist im Werkzeugkopf 12 eine Strahldüse 14 und eine Optik 15 zur Überwachung der Bearbeitung der Kühlluftbohrungen 3 der Leitschaufeln 1 zu sehen. Weiterhin sind die Formgedächtnisdrähte 16, Steuerleitungen 17 zur Widerstandserwärmung, ein Medienschlauch 18 für das Bearbeitungsfluid und eine Glasfaser 19 für die Optik sowie ein innerer Stützschlauch 20 zu sehen.

Die Fig. 6 zeigt somit die Betätigungsvorrichtung, welche durch die Formgedächtnisdrähte 16 gebildet ist. Diese erlauben, wie in Fig. 6 dargestellt, eine Bewegung oder Abwinklung des vorderen Bereichs der Bearbeitungsvorrichtung 10. Hierdurch ist es möglich, das distale Ende der Bearbeitungsvorrichtung 10, nämlich insbesondere die Strahldüse 14 exakt zu platzieren, um Ausnehmungen der Turbinenschaufeln zu reinigen. Da die Geometrie des jeweils zu bearbeitenden Fluggasturbinentriebwerks vorgegeben und vorbekannt ist, ist es möglich, die erfindungsgemäße Vorrichtung exakt so zu dimensionieren und zu positionieren, dass eine exakte, zielgenaue Bearbeitung/Reinigung der Kühlluftaustrittsöffnungen der Turbinenschaufeln möglich ist. Die exakte Platzierung erfolgt insbesondere auch dadurch, dass der Flansch 13 im Bereich der Zugangsöffnungen/Boroskop-Öffnungen, oder im Bereich der demontierten Kraftstoffeinspritzdüsen der Brennkammer 21 befestigt/angeschraubt werden kann. Bei Aktivierung der Formgedächtnisdrähte gelangt somit die Strahldüse 14 an den vorgegebenen Einsatzort. Erfindungsgemäß ist es auch möglich, mehrere derartige Formgedächtnisdrähte vorzusehen, um wahlweise verschiedene Bearbeitungspositionen erreichen zu können.

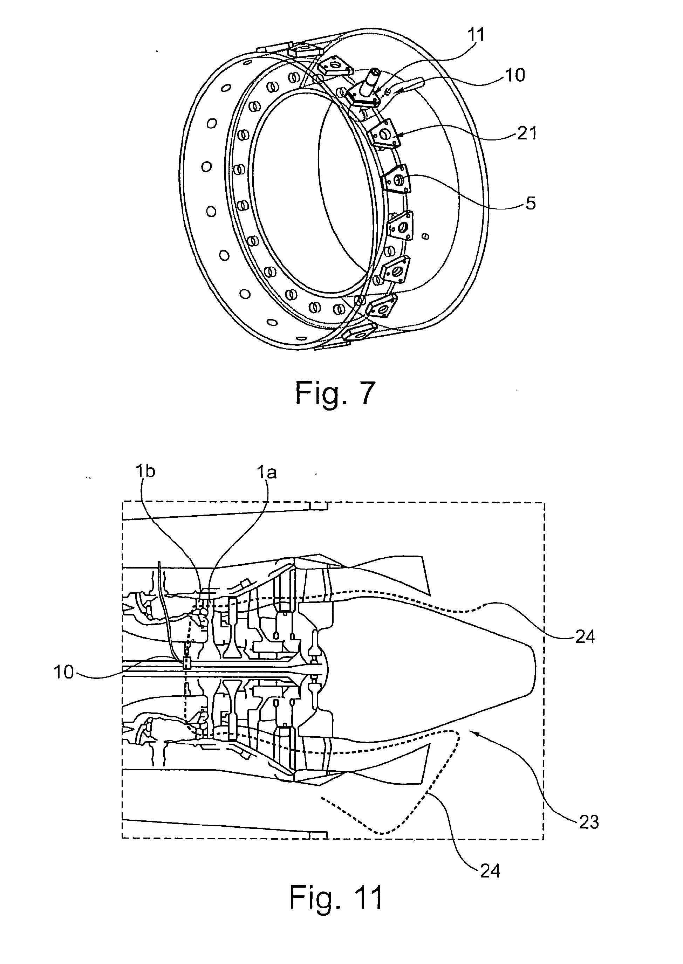

Die Fig. 7 zeigt eine Darstellung einer Brennkammer 21 mit eingesetzter Einführhilfe 11 und Bearbeitungsvorrichtung 10. Dabei ist insbesondere die Befestigung des Flansches 13 (Fig. 6) an den Montagestellen der Kraftstoffeinspritzdüsen dargestellt.

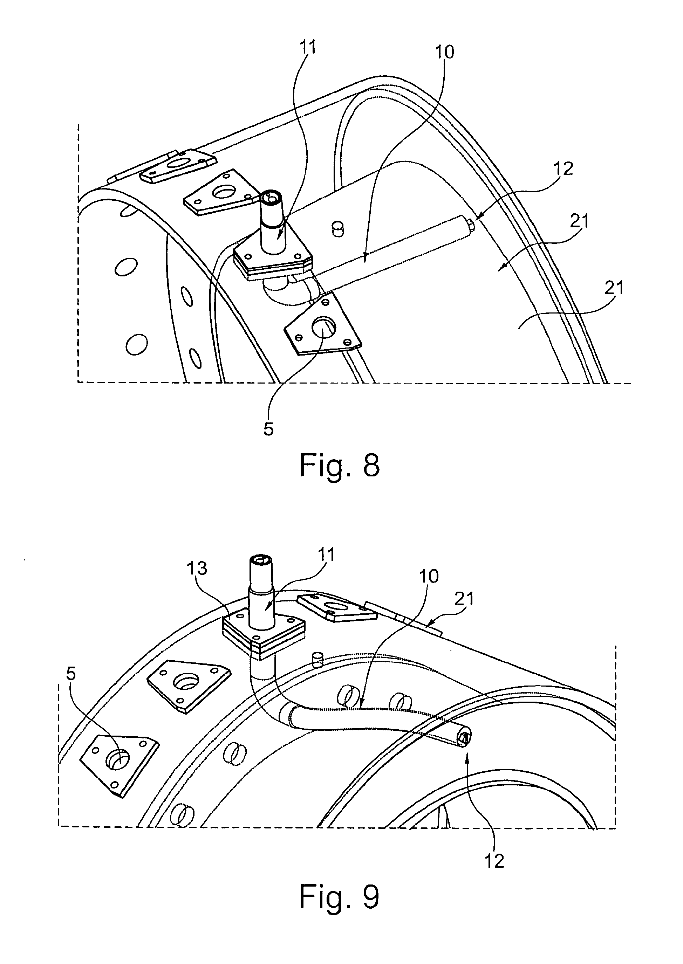

In der Fig. 8 ist die Bearbeitungsvorrichtung 10 in nicht aktiver, gerader Form, eingesetzt, in der Brennkammer 21 dargestellt, in Fig. 9 ist die Bearbeitungsvorrichtung 10 aktiv ausgelenkt dargestellt, wobei die Auslenkung, wie oben stehend erläutert, durch Aktivierung der Formgedächtniselemente erfolgt.

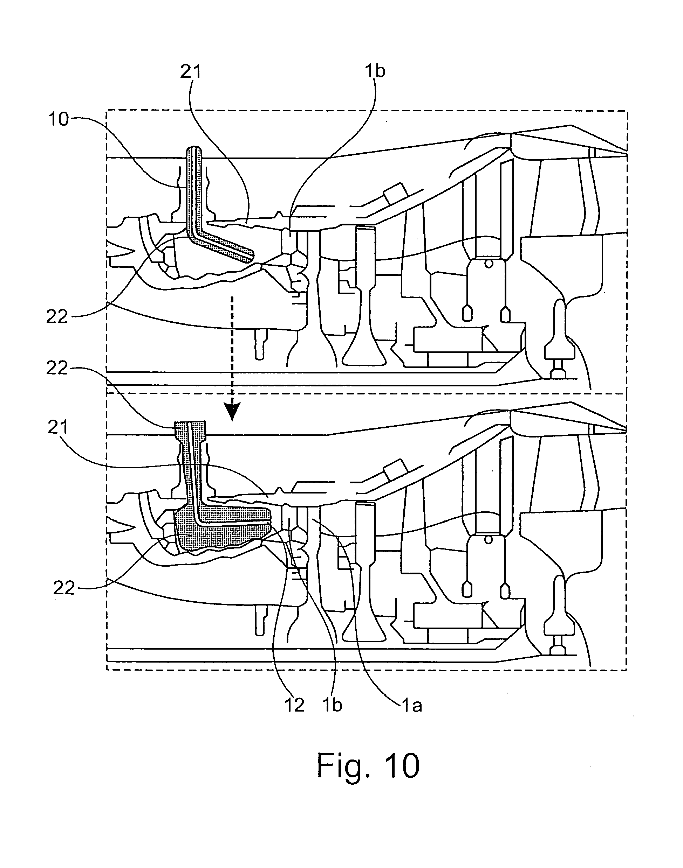

Die Fig. 10 zeigt ein weiteres Ausführungsbeispiel der erfindungsgemäßen Bearbeitungsvorrichtung. In dem oberen Teil der Fig. 10 ist eine nicht aufgeblasene Schiene 22 dargestellt, welche in ein Triebwerk eingebracht wird. In Fig. 10, unterer Teil, ist diese Schiene 22 aufgeblasen und mit eingeführter Zuführleitung für ein Bearbeitungswerkzeug 10 dargestellt. Die Schiene 22 nimmt dabei ein vorgegebenes Volumen ein und stützt sich so an den Innenwänden der Brennkammer 21 ab, wodurch eine ausreichende Steifigkeit für die Bearbeitung erzeugt wird.

In der Fig. 11 ist schematisch ein weiteres Ausführungsbeispiel der erfindungsgemäßen Bearbeitungsvorrichtung dargestellt. Diese umfasst ein Seilzugsystem. Dabei wird an der Boroskop-Öffnung 5 oder am Triebwerksaustritt 23 eine Bearbeitungsvorrichtung 10 befestigt, über die ein Seil 24 geführt wird. Das Seil 24 muss vor der Bearbeitung in das Triebwerk eingebracht werden. An dem Seil 24 wird das Bearbeitungswerkzeug 10 befestigt, durch Ziehen an einem der Seilenden, kann das Bearbeitungswerkzeug 10 entlang der Hochdruckturbineneintrittsleitschaufeln 16 geführt werden, um diese zu bearbeiten.

Mit der Erfindung wird ermöglicht, die Freilegung der Kühlluftbohrungen auszuführen ohne das Triebwerk vom Luftfahrzeug abzubauen. Hierfür werden über die an dem Triebwerk befindlichen Boroskop-Öffnungen miniaturisierte Werkzeuge dem Reparatur-/Bearbeitungsbereich zugeführt. Eine abschließende visuelle Kontrolle stellt sicher, dass der zu bearbeitende Bereich wieder weitestgehend den Zeichnungsanforderungen angepasst und somit in einen ordnungsgemäßen Zustand versetzt wurde.

### Bezugszeichenliste

- 1a: Hochdruckturbinenlaufschaufel / Laufschaufel
- 1b: Hochdruckturbinenleitschaufel / Leitschaufel
- 2: Ablagerungen / Schmutzschichten / Fremdstoffschichten
- 3: Kühlluftausnehmungen (Kühlluftbohrungen)
- 4: Gehäuse
- 5: Zugangsöffnung / Boroskop-Öffnung
- 6: Manipulator
- 7: Steuereinheit
- 8: Schlauch
- 9: Bildschirm
- 10: Bearbeitungsvorrichtung
- 11: Einführhilfe (Rohr)
- 12: Vorrichtungskopf mit Werkzeug
- 13: Flansch
- 14: Spritzdüse / Strahldüse
- 15: Linse für Glasfaseroptik / Optik
- 16: Formgedächtnisdraht
- 17: Steuerungsleitung zur Widerstandserwärmung
- 18: Medienschlauch
- 19: Glasfaser / Glasfaseroptik / optisches Überwachungselement
- 20: Innerer Stützschlauch
- 21: Brennkammer
- 22: Aufblasbare Schiene / Schienenelement
- 23: Triebwerksaustritt
- 24: Seil

## Patentansprüche

1. Bearbeitungsvorrichtung zur In-Situ-Bearbeitung von Turbinenschaufeln (1 a, 1b) einer Gasturbine, mit einer Bearbeitungsvorrichtung (10), welche durch zumindest eine Zugangsöffnung (5) in eine Brennkammer (21) der Gasturbine einführbar und an Kühlluftausnehmungen (3) der Turbinenschaufeln platzierbar ist, wobei die Bearbeitungsvorrichtung (10) endseitig einen Vorrichtungskopf (12) mit zumindest einem Werkzeug und zumindest einer Strahldüse (14) umfasst, wobei die Strahldüse (14) mit einem Medienschlauch (18) zur externen Zufuhr eines Bearbeitungsmediums verbunden ist, wobei die Bearbeitungsvorrichtung (10) mit einer Betätigungsvorrichtung (16, 22, 24) zur exakten Führung und/oder Platzierung und/oder Bewegung des Vorrichtungskopfes (12) versehen ist.

2. Vorrichtung nach Anspruch 1, **dadurch gekennzeichnet, dass** die Betätigungsvorrichtung Elemente aus einer Memory-Legierung umfasst.

3. Vorrichtung nach Anspruch 2, **dadurch gekennzeichnet, dass** die Betätigungsvorrichtung eine Heizvorrichtung für die Elemente aus der Memory-Legierung umfasst.

4. Vorrichtung nach Anspruch 1, **dadurch gekennzeichnet, dass** die Betätigungsvorrichtung eine Seilzugvorrichtung mit zumindest einem Seil (24) umfasst.

5. Vorrichtung nach Anspruch 1, **dadurch gekennzeichnet, dass** die Betätigungsvorrichtung zumindest ein aufblasbares, ballonartiges Schienenelement (22) umfasst.

6. Vorrichtung nach einem der Ansprüche 1 bis 5, **dadurch gekennzeichnet, dass** die Vorrichtung ein optisches Überwachungselement mit zumindest einer Glasfaseroptik (19) umfasst.

7. Verfahren zur Bearbeitung von Hochdruckturbinenschaufeln (1a, 1b) einer Gasturbine unter Verwendung einer Vorrichtung nach einem der Ansprüche 1 bis 6, bei welchem Ablagerungen und/oder Fremdstoffschichten (2) im Bereich von Kühlluftausnehmungen (3) entfernt werden, wobei im nicht-demontierten Zustand der Gasturbine mittels eines Werkzeugs Partikel der Ablagerungen und/oder der Fremdstoffschichten (2) abgetragen und abgesaugt werden.

8. Verfahren nach Anspruch 7, **dadurch gekennzeichnet, dass** die Ablagerungen und/oder Fremdstoffschichten strahlend mittels eines Druckflüssigkeitsstrahls entfernt werden.

9. Verfahren nach Anspruch 8, **dadurch gekennzeichnet, dass** als flüssiges Medium Wasser, Wasser mit Zusätzen, Öl, Kohlendioxid oder Stickstoff verwendet wird.

10. Verfahren nach einem der Ansprüche 7 bis 8, **dadurch gekennzeichnet, dass** hochenergetisches Licht (Laser) für die Entfernung der Fremdstoffschichten verwendet wird.

11. Verfahren nach einem der Ansprüche 7 bis 10, **dadurch gekennzeichnet, dass** nach dem Entfernen der Ablagerungen und/oder Fremdstoffschichten (2) diese mit einem Gas gespült werden.

12. Verfahren nach einem der Ansprüche 7 bis 11, **dadurch gekennzeichnet, dass** das Verfahren unter visueller Kontrolle durchgeführt wird.

13. Verfahren nach einem der Ansprüche 7 bis 12, **dadurch gekennzeichnet, dass** zur Durchführung des Verfahrens benötigte Werkzeuge (12) und/oder Geräte durch in der Gasturbine vorgesehene Boroskop-Öffnungen (5) oder durch Demontage von Bauteilen geschaffene in den Bereich der Hochdruckturbine eingebracht werden.

14. Verfahren nach einem der Ansprüche 7 bis 13, **dadurch gekennzeichnet, dass** die Führung des Werkzeugs (12) und/oder der Geräte mittels einer Bearbeitungsvorrichtung (10) erfolgt, welche mittels Formgedächtnisdrähten ihre Form ändern kann.

15. Verfahren nach einem der Ansprüche 7 bis 13, **dadurch gekennzeichnet, dass** die Führung des Bearbeitungswerkzeugs (12) und/oder der Geräte über starre, flexible oder volumenvergrößernde Schienen (22) oder Seile (24) erfolgt.
